# EUROPEAN PATENT APPLICATION

(11) **EP 4 822 497 A1**
(43) Date of publication of application: **14.10.2026**
(21) Application number: 26168076.3
(22) Date of filing: 26.03.2026
(51) Int. Cl.: G06F 3/038, A63F 13/31, A63F 13/40, A63F 13/42, A63F 13/44, A63F 13/45, A63F 13/358, A63F 13/2145, G06F 3/0354, H04L 1/00, H04L 7/00

(54) **INFORMATION PROCESSING SYSTEM, INFORMATION PROCESSING APPARATUS, COMPUTER PROGRAM, AND COMPUTER-IMPLEMENTED METHOD**

(30) Priority: 28.03.2025 JP 2025056772
(71) Applicant: Nintendo Co., Ltd., Kyoto-shi, Kyoto 601-8501 (JP)
(72) Inventor: YOSHIMURA, Ren, Kyoto-shi, Kyoto 601-8501 (JP); ITAGAKI, Toe, Kyoto-shi, Kyoto 601-8501 (JP); TOMIOKA, Yusuke, Kyoto, 601-8501 (JP); MATSUOKA, Masayoshi, Kyoto-shi, Kyoto 601-8501 (JP); YASUDA, Shumpei, Kyoto-shi, Kyoto 601-8501 (JP); NARUSE, Fumisato, Kyoto-shi, Kyoto 601-8501 (JP)
(74) Representative: Lorenz Seidler Gossel Part. mbB

(57) **Abstract**

An information processing system includes a first information processing device including a mouse and a second information processing device. The first information processing device performs a first set of operations including periodically acquiring a differential movement amount from its own mouse, accumulating the acquired differential movement amount to calculate an accumulated movement amount, and transmitting the accumulated movement amount to the second information processing device. The second information processing device performs a second set of operations including receiving the accumulated movement amount transmitted from the first information processing device, calculating a differential movement amount from the received accumulated movement amount and the previously received accumulated movement amount, and executing an application program that uses the differential movement amount of the mouse of the first information processing device.

## Description

### FIELD

The present disclosure relates to an information processing system, an information processing apparatus, a computer program, and a computer-implemented method, and particularly to, for example, an information processing system, an information processing apparatus, a computer program, and a computer-implemented method, which comprise an operation unit.

### BACKGROUND AND SUMMARY

Conventionally, there is an information processing system that transmits operation information of an operation unit to another information processing apparatus.

There are cases where loss of operation information occurs, and there is room for improvement in consideration for the situation.

(Configuration 1) In one disclosed example embodiment, an information processing system may include a first information processing device including a mouse and a second information processing device. The first information processing device may be configured to perform a first set of operations including periodically acquiring a differential movement amount from its own mouse, accumulating the acquired differential movement amount to calculate an accumulated movement amount, and transmitting the accumulated movement amount to the second information processing device. The second information processing device may be configured to perform a second set of operations including receiving the accumulated movement amount transmitted from the first information processing device, calculating a differential movement amount from the received accumulated movement amount and the previously received accumulated movement amount, and executing an application program that uses the differential movement amount of the mouse of the first information processing device.

(Configuration 2) In one disclosed example embodiment, in Configuration 1, the second set of operations further may include periodically acquiring the differential movement amount from its own mouse, and the application program may be configured to use the acquired differential movement amount of the mouse of the second information processing device and the calculated differential movement amount of the mouse of the first information processing device.

(Configuration 3) In one disclosed example embodiment, in Configuration 1 or 2, the first set of operations further may include acquiring elapsed time from the previously acquired time, accumulating the elapsed time to calculate accumulated elapsed time, and transmitting the accumulated elapsed time. The second set of operations further may include receiving the transmitted accumulated elapsed time, and calculating differential elapsed time from the received accumulated elapsed time and the previously received accumulated elapsed time. The application program may be configured to use the differential elapsed time and the differential movement amount.

(Configuration 4) In one disclosed example embodiment, in any one of Configurations 1 to 3, the application program may be a game program. The accumulated movement amount may be acquired by accumulating the differential movement amount from start of a game.

(Configuration 5) In one disclosed example embodiment, in any one of Configurations 1 to 4, the first set of operations further may include resetting a value of the accumulated movement amount and issuing a notification when a specific condition is satisfied. The second set of operations further may include resetting the accumulated movement amount based on the notification. The resetting may be performed when a game interruption operation is performed in the first information processing device. The first set of operations further may include resetting a value of the accumulated elapsed time and issuing a notification when a specific condition is satisfied. The second set of operations further may include resetting the accumulated elapsed time based on the notification.

(Configuration 6) In one disclosed example embodiment, in any one of Configurations 1 to 5, the first set of operations further may include assigning identification information updated with each acquisition of the differential movement amount, and transmitting the assigned identification information with the accumulated movement amount to the second information processing device. The second set of operations further may include assigning identification information updated with each reception to the accumulated movement amount transmitted from the first information processing device.

(Configuration 7) In one disclosed example embodiment, an information processing device using a mouse, may includes processing circuitry including one or more processors, and one or more memories storing instructions when executed by the one or more processors to perform operations including periodically acquiring a differential movement amount from the mouse, accumulating the acquired differential movement amount to calculate an accumulated movement amount, and transmitting the accumulated movement amount to another information processing device.

(Configuration 8) In one disclosed example embodiment, an information processing device connecting to another information processing device using a mouse, may includes processing circuitry including one or more processors, and one or more memories storing instructions when executed by the one or more processors to perform operations including acquiring an accumulated movement amount obtained by accumulating a differential movement amount of the mouse from the another information processing device, calculating a differential movement amount from the acquired accumulated movement amount and a previously acquired accumulated movement amount, and using the calculated differential movement amount.

(Configuration 9) In one disclosed example embodiment, in Configuration 7, the operations further may include acquiring elapsed time since the previously acquired time, accumulating the acquired elapsed time to calculate accumulated elapsed time, and transmitting the accumulated elapsed time to the another information processing device.

(Configuration 10) In one disclosed example embodiment, in Configuration 8, the operations further may include acquiring accumulated elapsed time obtained by accumulating elapsed time since previously acquired time from the another information processing device, and calculating differential elapsed time since the acquired accumulated elapsed time and previously acquired accumulated elapsed time, and using the calculated differential elapsed time.

(Configuration 11) In one disclosed example embodiment, a program having stored therein instructions that, when executed, may cause one or more processors to perform operations including periodically acquiring a differential movement amount of a mouse, accumulating the acquired differential movement amount to calculate an accumulated movement amount, and transmitting the accumulated movement amount to another information processing device for calculating a differential movement amount.

(Configuration 12) In one disclosed example embodiment, a computer program having stored therein instructions that, when executed, may cause one or more processors of an information processing apparatus to perform operations including acquiring an accumulated movement amount obtained by accumulating a differential movement amount of a mouse from another information processing device, calculating a differential movement amount from the acquired accumulated movement amount and a previously acquired accumulated movement amount, and storing the calculated differential movement amount to be used by an application program.

(Configuration 13) In one disclosed example embodiment, in Configuration 11, the operations further may include periodically acquiring elapsed time since previously acquired time, accumulating the acquired elapsed time to calculate accumulated elapsed time, and transmitting the accumulated elapsed time to the another information processing device to calculate elapsed time.

(Configuration 14) In one disclosed example embodiment, in Configuration 12, the operations further may include acquiring accumulated elapsed time obtained by accumulating elapsed time since previously acquired time from the another information processing device, calculating differential elapsed time since the acquired accumulated elapsed time and the previously acquired accumulated elapsed time, and storing the differential elapsed time to be used by the application program.

(Configuration 15) In one disclosed example embodiment, a computer-implemented method may includes periodically acquiring a differential movement amount from a mouse, accumulating the acquired differential movement amount to calculate an accumulated movement amount, transmitting the accumulated movement amount to another information processing device, receiving at the another information processing device, the accumulated movement amount, calculating, at the another information processing device, a differential movement amount from the received accumulated movement amount and a previously received accumulated movement amount, and executing, at the another information processing device, an application using the differential movement amount.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Figure 1 shows an exemplary illustrative non-limiting drawing illustrating an exemplary configuration of an overall system 1 including an information processing system according to an embodiment.
Figure 2 shows an exemplary illustrative non-limiting drawing illustrating an exemplary flow of game processing in the information processing system according to an embodiment.
Figure 3 shows an exemplary illustrative non-limiting drawing illustrating an exemplary hardware configuration of a game device 100 according to an embodiment.
Figure 4 shows an exemplary illustrative non-limiting drawing illustrating an exemplary program stored in a flash memory 106 of a game device (host) 100-1 according to an embodiment.
Figures 5A and 5B show exemplary illustrative non-limiting drawings illustrating exemplary data stored in a DRAM 108 of the game device according to an embodiment.
Figure 6 shows an exemplary illustrative non-limiting flowchart illustrating exemplary game processing in a game device (guest) 100 according to an embodiment.
Figure 7 shows an exemplary illustrative non-limiting flowchart illustrating exemplary processing by an operation data generation function program of system software according to an embodiment.
Figure 8 shows an exemplary illustrative non-limiting flowchart illustrating exemplary processing for generating touch panel data in operation data generation processing by a system program according to an embodiment.
Figure 9 shows an exemplary illustrative non-limiting subroutine flowchart illustrating exemplary processing for assigning a touch ID according to an embodiment.
Figure 10 shows an exemplary illustrative non-limiting flowchart illustrating exemplary processing for generating motion sensor data and mouse data in operation data generation processing by the system program according to an embodiment.
Figure 11 shows an exemplary illustrative non-limiting flowchart illustrating exemplary operation data processing according to an embodiment.
Figure 12 shows an exemplary illustrative non-limiting flowchart illustrating exemplary touch panel data processing (subroutine processing in step 54 in Figure 11) according to an embodiment.
Figure 13 shows an exemplary illustrative non-limiting flowchart illustrating exemplary motion sensor data processing (subroutine processing in S56 in Figure 11) according to an embodiment.
Figure 14 shows an exemplary illustrative non-limiting flowchart illustrating exemplary mouse data processing (subroutine in step S58 in Figure 11) according to an embodiment.
Figure 15 shows an exemplary illustrative non-limiting flowchart illustrating exemplary game processing in game device (host) 100 according to an embodiment.
Figure 16 shows an exemplary illustrative non-limiting flowchart illustrating exemplary data acquisition processing for acquiring operation data (guest) according to an embodiment.
Figure 17 shows an exemplary illustrative non-limiting subroutine flowchart illustrating exemplary processing for acquiring touch panel data (guest) according to an embodiment.
Figure 18 shows an exemplary illustrative non-limiting subroutine flowchart illustrating exemplary processing for determining a touch release count according to an embodiment.
Figure 19 shows an exemplary illustrative non-limiting flowchart illustrating exemplary delta time calculation processing according to an embodiment.
Figure 20 shows an exemplary illustrative non-limiting subroutine flowchart illustrating exemplary processing for acquiring motion sensor data (guest) according to an embodiment.
Figure 21 shows an exemplary illustrative non-limiting subroutine flowchart illustrating exemplary processing for acquiring mouse data (guest) according to an embodiment.
Figures 22A to 22F show exemplary illustrative non-limiting drawings illustrating exemplary diagrams illustrating a specific example (No. 1) when packet loss occurs according to an embodiment.
Figures 23A to 23F show exemplary illustrative non-limiting drawings illustrating exemplary diagrams illustrating a specific example (No. 2) when packet loss occurs according to an embodiment.

### DETAILED DESCRIPTION OF NON-LIMITING EXAMPLE EMBODIMENTS

An embodiment will be described in detail with reference to the drawings. It should be noted that the same reference numerals are assigned to the same or corresponding portions in the drawings, and description thereof will not be repeated.

### [A. Example of System Configuration]

First, an example of a configuration of a game system, which is an example of an information processing system according to the embodiment, will be described. It should be noted that the information processing system may be a system in which a game is not executed.

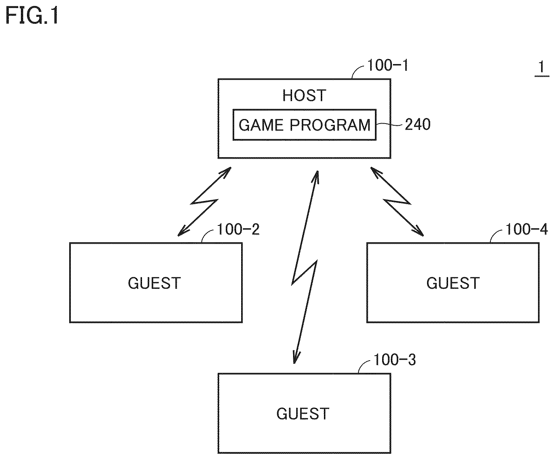

Figure 1 is a schematic diagram showing an example of the configuration of an overall system 1 including the information processing system according to the embodiment. The information processing system comprises a plurality of information processing devices. A game device 100, which is an example of an information processing device, will be described. However, the information processing device may be, for example, a personal computer, a smartphone, a tablet, a wearable terminal, a smart television, etc.

Referring to Figure 1, the overall system 1 comprises one or more game devices 100. Figure 1 shows, as an example, the overall system 1 comprising four game devices 100. In the following description, when it is necessary to identify each of the plurality of game devices 100, branch numbers are assigned for distinction (for example, game devices 100-1, 100-2, 100-3, and 100-4 shown in Figure 1). The game device (host) 100-1 is shown as being peer-to-peer connected (ad hoc communication) with other game devices (guests) 100-2, 100-3, and 100-4 via local wireless communication as an example of a network (wireless communication according to the IEEE 802.11 standard, or wireless communication which is improvement thereof, or Bluetooth^{®}, etc.).

In the overall system 1, the game device 100 may participate in one or more player groups (hereinafter also abbreviated as "groups"). In order for the game device 100 to participate in any of the groups, a user account of a user who uses the game device 100 may be used, or identification information of the game device 100, etc. may be used.

A certain game device 100 may belong to only one group at the same time, or may belong to a plurality of groups at the same time. In the following, processing in a case where a game device 100 belongs to one group will be described as an example. An upper limit may be defined for the number of game devices 100 that can belong to one group.

A game program 240 is stored in the game device (host) 100-1, and by executing the game program 240, it is possible to communicate with one or more other game devices 100 belonging to a group connected via local wireless communication, and to execute game processing. In this example, the game device (guest) does not need to execute the game program.

In this example, local wireless communication is described, however, as another example of the network, a configuration example in which four game devices 100-1 to 100-4 are connected via Internet communication may be used. For example, the game devices 100 may exchange data with each other via the network. The communication method by which each of the game devices 100 connects to the network may be a wired method or a wireless method. Further, a management server may also be included. The game devices 100 may communicate with each other via the management server, or may directly communicate with each other without the management server (Peer to Peer) being interposed.

For example, when the game program 240 supports multiplayer play, the game device (host) 100-1 communicates with other game devices (guests) 100-2, 100-3, and 100-4. The game device (host) 100-1 executes the multiplayer-play game program 240, based on operation inputs from the players who use the game device (host) and other game devices (guests).

In this specification, "multiplayer play" means that a plurality of players (users) simultaneously play a game by the same game program. Alternatively, "multiplayer play" means that a plurality of players (users) participate in the same player group.

It should be noted that all of the game devices 100 may previously store the game program 240 by any method, and each game device 100 may execute the game program to perform a multiplayer game.

Participation in a group may be performed on a user basis or an account basis. One or more accounts may be registered in one game device 100. In this case, a user using the game device 100 may select an account each time. Further, a user using the game device 100 may operate the game device 100 to access a management server etc., and by performing processing such as login, an account may be dynamically associated with the game device 100.

### [B. Flow of Game Processing in the Game Device 100]

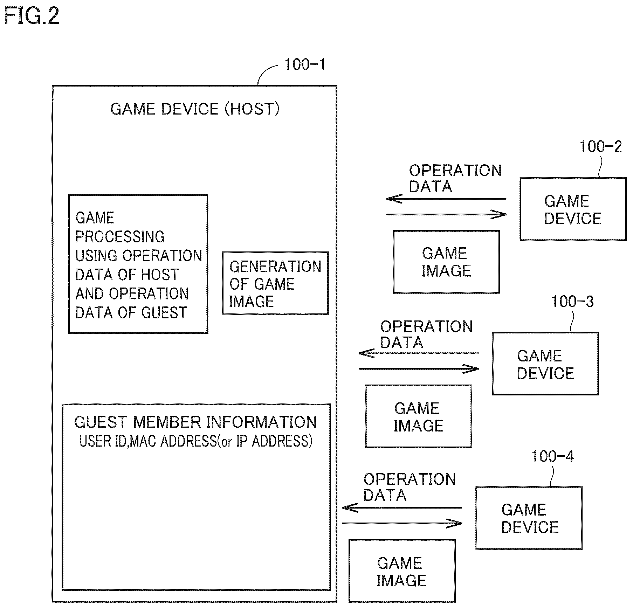

Figure 2 is a schematic diagram of a flow of game processing in the information processing system according to the embodiment. Referring to Figure 2, a flow of game processing in the information processing system is shown as an example. The game device (host) 100-1 has information on guest members constituting a group. As an example, it has information corresponding to guests. The guest member information includes a user ID and a MAC address (or an IP address) corresponding to each guest. The game device (host) 100-1 identifies game devices 100-2, 100-3, and 100-4 corresponding to respective guests according to the guest member information, and performs data communication. In this example, the game device (host) 100-1 receives operation data from game devices 100-2, 100-3, and 100-4 corresponding to respective guests. The game device (host) 100-1 executes game processing by the game program using operation data of the game device (host) 100-1 and operation data of the game device (guest) 100. The game device (host) 100-1 generates a game image by game processing, and transmits the game image to game devices 100-2, 100-3, and 100-4 (for example, streaming distribution of an image generated for each game frame). For example, the game image displayed on the game device (host) 100-1 and the game images displayed on game devices (guests) 100-2, 100-3, 100-4 may be common (same), or the game images displayed on the game device (host) 100-1, the game device (guest) 100-2, the game device (guest) 100-3, and the game device (guest) 100-4 may be different from each other.

### [C. Example of Hardware Configuration of the Game Device 100]

Next, an example of a hardware configuration of the game device 100 according to the embodiment will be described.

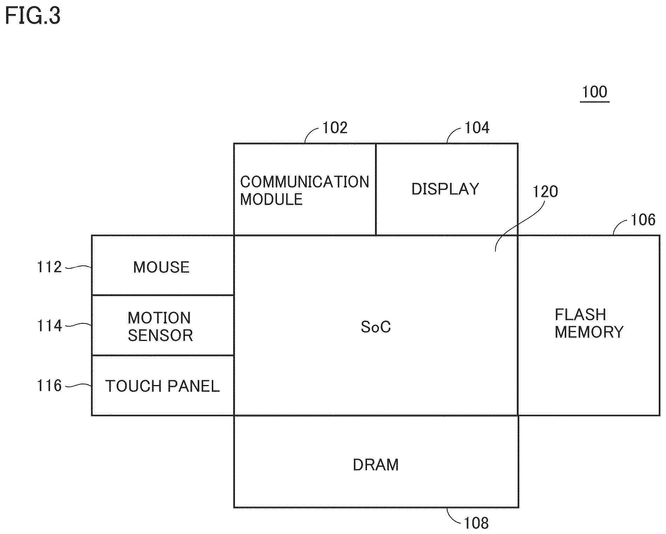

Figure 3 is a schematic diagram showing an example of the hardware configuration of the game device 100 according to the embodiment. The game device 100 is a kind of computer. Referring to Figure 3, the game device 100 comprises, for example, a communication module 102, a display 104, a flash memory 106, a DRAM 108, a mouse 112, a motion sensor 114, a touch panel 116, and an SoC (System on Chip) 120.

SoC 120 is a processor, and is responsible for processing executed in the game device 100. SoC 120 comprises, for example, at least one of a CPU (Central Processing Unit), a GPU (Graphics Processing Unit), a buffer, etc. The CPU, the GPU, and the buffer, etc. may be implemented independently of one another, rather than on a single board. SoC 120 may comprise hardwired circuitry such as an ASIC (Application Specific Integrated Circuit) or an FPGA (Field Programmable Gate Array). SoC 120 may comprise multiple CPUs and GPUs, and may have multiple cores.

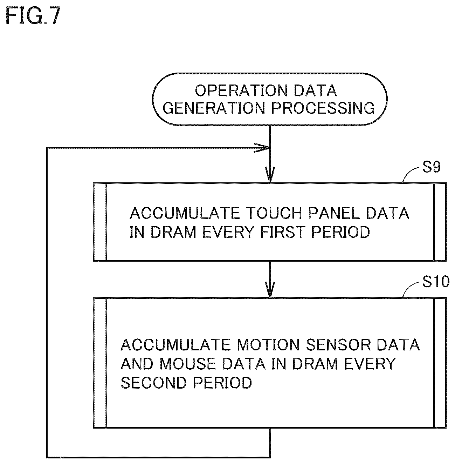

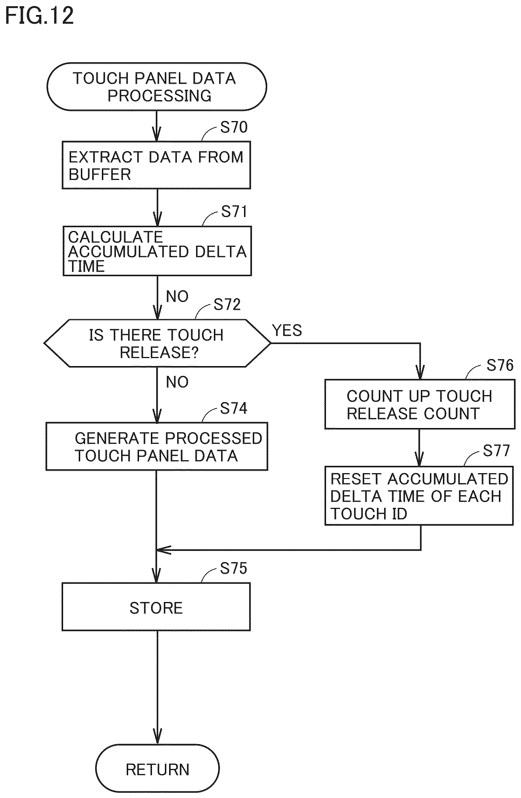

The flash memory 106 is a non-volatile storage medium, and is a memory mainly used for storing various kinds of data stored in the game device 100. The flash memory 106 stores a system program 200 and a game program 240, which will be described later. The system program 200 includes computer-readable instructions for basic processing such as hardware control and provision of a program execution environment of the game device 100. The system program 200 may be an OS (Operating System). The system program includes an operation data generation function program (a program that performs the processing in Figures 7, 8, 9, and 10, which will be described later) and an operation data processing function program (a program that performs the processing in Figures 12, 13, and 14, which will be described later). Further, the system program 200 may include an application program. The system program 200 includes computer-readable instructions for operating devices of operation units such as the mouse 112, the motion sensor 114, and the touch panel 116, and for acquiring operation data of the operation units. The game program 240 includes computer-readable instructions for executing a game.

DRAM (Dynamic Random Access Memory) 108 is a volatile storage medium, and is a memory mainly used for temporarily storing various kinds of data used in information processing. The "memory" may comprise at least a flash memory and a DRAM, and may include other storage media.

Mouse 112 is a device that receives a user operation, and receives an operation for specifying a position of a cursor on a screen, for example. For example, in accordance with a user operation, it receives an input of movement of a cursor position in a horizontal (X) direction and a vertical (Y) direction on XY coordinates on a screen, and outputs a changed movement amount (differential movement amount) in the X direction and the Y direction from a position at previous sampling.

Motion sensor 114 is a sensor that senses inclination or movement of an object, etc., and measures and outputs an acceleration value, an angular velocity value, and a rotation angle, etc. calculated from the angular velocity value of a game device 100 main body.

Touch panel 116 detects and outputs coordinates (touch position) touched by a user's finger, etc. on a screen, for example. For example, in a case of a capacitive touch panel, the touch panel detects a touch position from a slight change in capacitance generated between a user's finger and the touch panel. The touch panel 116 may detect touches of a plurality of fingers of a user. A touch ID is assigned in accordance with a touch-on of a finger. The touch panel 116 outputs touch position coordinate data (X, Y) in the horizontal (X) direction and the vertical (Y) direction on XY coordinates on a screen, together with the touch ID. Note that, without being limited to touch position coordinate data, other data, for example, a touch radius, etc. may be included.

Mouse 112, motion sensor 114, and touch panel 116 are operation units that receive user operation. The operation unit may be an interface with a device that receives a user operation (for example, a game controller). The device that receives the user operation may exist outside the game device 100.

Communication module 102 performs transmission and reception of data to and from other game devices 100, etc. The communication module 102 may be connected to a network 10 via wired connection, or may be connected via wireless connection. As wired connection, for example, USB (Universal Serial Bus) connection or parallel connection, etc. may be used. As wireless connection, for example, Bluetooth^{®}, ZigBee^{®}, wireless LAN (IEEE 802.11 standard), etc. may be used.

Display 104 is, for example, an LCD (Liquid Crystal Display) or an organic EL display, etc.

For example, the information processing system comprises a game device (guest) 100 (a first information processing device) and a game device (host) 100 (a second information processing device). The game device (guest) 100 performs operations comprising periodically acquiring operation data of the game device (guest) and storing the operation data together with elapsed time since the previous cycle (first storing), calculating accumulated elapsed time (cumulative total of the elapsed time) based on the first stored data, and transmitting the first stored operation data and the accumulated elapsed time to the game device (host) 100. The game device (host) 100 performs operations comprising storing the operation data and the accumulated elapsed time transmitted from the game device (guest) 100, calculating differential elapsed time from the accumulated elapsed time currently received and the accumulated elapsed time previously received, storing the received operation data and the differential elapsed time in the game device (host) 100, and using the received operation data of the game device (guest) 100 and the calculated differential elapsed time and executing game program 240, which is an example of an application program. For example, the information processing system includes game device (guest) 100 (first information processing device) including mouse 112 and game device (host) 100 (second information processing device). Game device (guest) 100 performs operations comprising periodically acquiring differential movement amount data from mouse 112 thereof, calculating an accumulated movement amount (cumulative total of the movement amount) by accumulating the acquired differential movement amount data, and transmitting the accumulated movement amount to game device (host) 100. Game device (host) 100 performs operations comprising recording the accumulated movement amount transmitted from game device (guest) 100, calculating a differential movement amount from the currently received accumulated movement amount and the previously received accumulated movement amount, and executing game program 240 which is one example of the application program that uses the calculated differential movement amount of mouse 112 of game device (guest) 100.

### [D. Program Configuration]

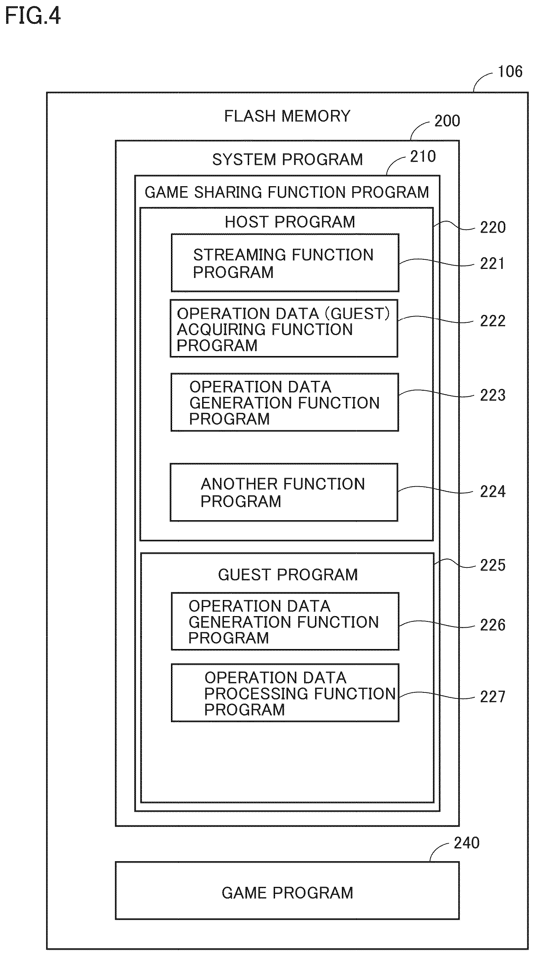

Figure 4 is a diagram illustrating an example of a program stored in flash memory 106 of game device (host) 100-1 according to the embodiment. Referring to Figure 4, the flash memory 106 stores system program 200, a firmware program 230 and game program 240.

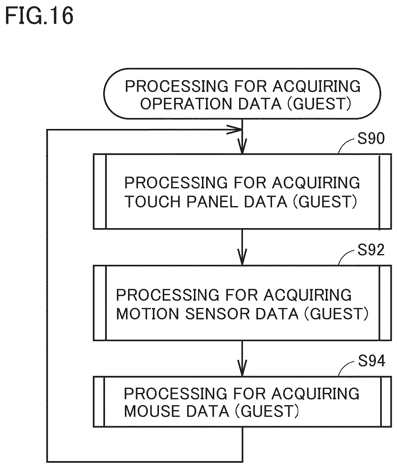

The system program 200 includes a game sharing function program 210 for realizing a game sharing function for sharing a game according to the game program 240 among multiple game devices 100. The game sharing function program 210 includes a host program 220 for realizing functions of game device 100 serving as a host when realizing the game sharing function, and a guest program 225 for realizing functions of game device 100 serving as a guest when realizing the game sharing function. The host program 220 includes a streaming function program 221 for executing processing to stream a game image generated by the game program from the game device 100 serving as the host to the game device serving as the guest, an operation data (guest) acquisition function program 222 for executing operation data acquisition processing to acquire operation data of the guest device when the game device 100 functions as a host device (a program for executing processing in Figures 16 to 21 described later), an operation data generation function program 223 for generating operation data of the game device 100 (host) when the game device 100 functions as a host device (a program for executing processing in Figures 7 to 10 described later), and another function program 224 for realizing other functions.

The guest program 225 realizes a guest function in the game sharing function, in which the game device 100 serving as any guest transmits operation data to the game device 100 serving as the host, receives a game image from the game device 100 serving as the host, and participates in a game based on the game program 240 executed by the host without executing the game program on the game device serving as the guest. For example, each of the game devices (guest) 100-2, 100-3, and 100-4 can perform guest-side game processing according to the game sharing function with the game device (host) 100-1 by executing the guest program 225 stored in the flash memory 106. The guest program 225 may be previously stored in the flash memory 106 of each of the game devices (guest) 100-2, 100-3, and 100-4, or may be distributed from the game device 100 serving as the host and stored in the flash memory 106 of the game device 100 serving as the guest. In the present embodiment, both of the host program and the guest program are stored in each game device 100 and selectively executed.

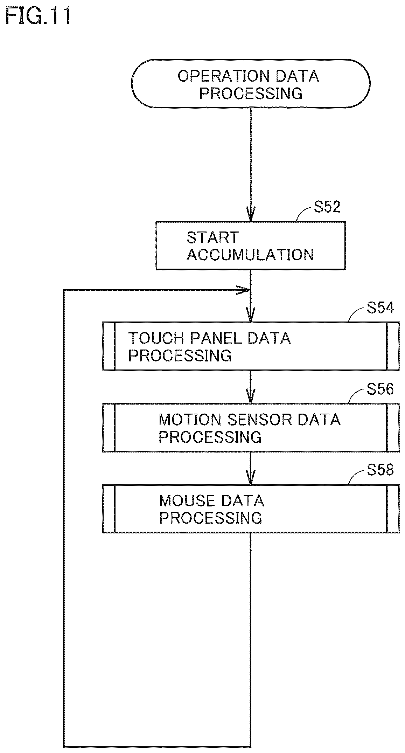

The guest program 225, when the game device 100 functions as the guest device, comprises an operation data generation function program 226 (a program for executing the processing in Figures 7 to 10 described later) for generating operation data of the game device 100 (guest), and an operation data processing function program 227 (a program for executing the processing in Figures 11 to 14 described later), etc.

In this example, a configuration in which one game program 240 is provided is described, however, without being limited thereto, a configuration in which multiple game programs having the game sharing function are provided may also be used. In this example, an example of a program stored in the flash memory 106 of the game device (host) 100-1 is described, however, without being limited thereto, similar programs may also be stored in the flash memories 106 of the game devices (guest) 100-2, 100-3, and 100-4.

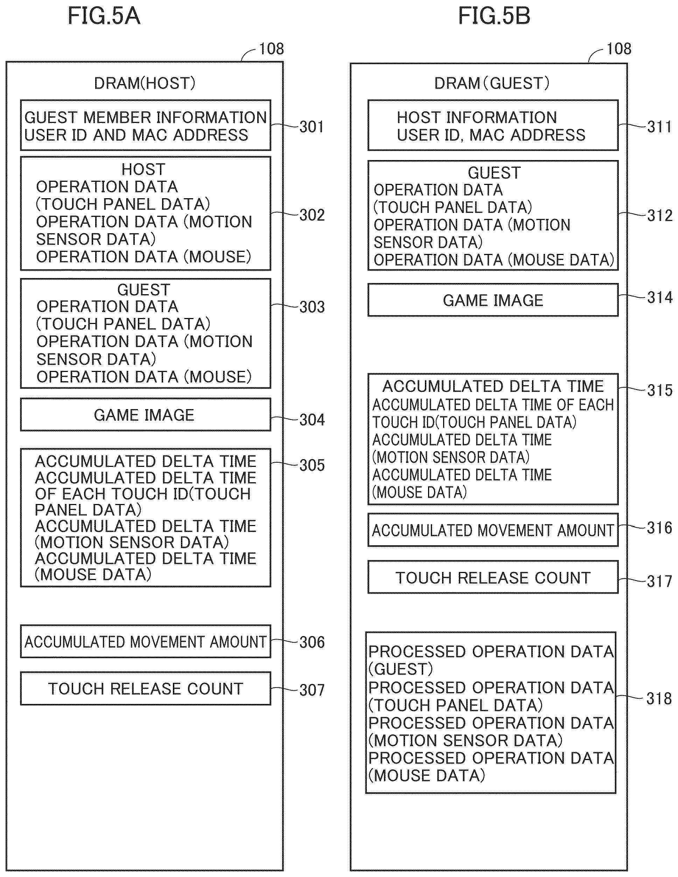

Figures 5A and 5B are a diagram illustrating data stored in DRAM 108 of the game device according to the embodiment. Referring to Figure 5A, as an example, data in the DRAM 108 on the game device (host) 100-1 side is shown. In the DRAM 108 on the game device (host) 100-1 side, data such as guest member information 301, operation data (host) 302, operation data (guest) 303, a game image 304, accumulated delta time 305, an accumulated movement amount 306, and a touch release count 307 are stored. Regarding accumulated delta time 305, accumulated movement amount 306, and touch release count 307, data for each guest exists and is stored individually in the DRAM 108.

Guest member information 301 is information on the user that participates in a group as the guest in game processing. As an example, guest member information 301 comprises a user ID of each guest and a MAC address associated with the user ID. The information is stored according to the number of guests participating in the group. For example, the information may be collected and stored in known member recruitment processing.

Operation data (host) 302 is data according to operation of the operation unit on the game device (host) 100-1 side, which is the own device. For example, operation data (host) 302 comprises touch panel data according to touch panel 116, motion sensor data according to motion sensor 114, and mouse data according to mouse 112.

Operation data (guest) 303 is operation data of operation units of other game devices (guest) 100-2, 100-3, and 100-4 received from other game devices (guest) 100-2, 100-3, and 100-4. For example, operation data (guest) 303 comprises touch panel data according to touch panel 116, motion sensor data according to motion sensor 114, and mouse data according to mouse 112 of other game devices (guest) 100-2, 100-3, and 100-4.

Operation data (host) 302 is operation data generated by operation data generation function program 226 by executing processing in Figures 7 to 10 described later.

Game image 304 is image data generated based on game processing. When a common game image is generated for the host and the guest, one game image is stored. When different game images are generated for the host and the guest, a host game image and a guest game image are stored respectively. Further, when multiple guests exist and different game images are generated for each guest, game images for each guest are stored.

Accumulated delta time 305 is data of accumulated elapsed time attached to operation data most recently received from the guest. Accumulated delta time 305 comprises accumulated delta time for mouse operation data, accumulated delta time for motion sensor operation data, and accumulated delta time for touch panel operation data. Further, accumulated delta time for touch panel operation data comprises accumulated delta time for each touch ID. Accumulated elapsed time is elapsed time accumulated from, for example, game start time.

Accumulated movement amount 306 is data of the accumulated movement amount attached to operation data most recently received from the guest.

Touch release count 307 is data of the touch release count most recently received from the guest. Touch release is a change from a state in which touch-on (touch input) is performed to a state of touch-off of all fingers (no touch input at all). The touch release count is data of the number of such changes.

Referring to Figure 5B, as an example, data in DRAM 108 on the game device (guest) 100-2, 100-3, and 100-4 side is shown. DRAM 108 on the guest side stores host information 311, operation data (guest) 312, a game image 314 received from the host, accumulated delta time 315, an accumulated movement amount 316, a touch release count 317, and processed operation data (guest) 318.

Host information 311 is information on the user that participates in a group as the host in game processing. For example, host information 311 comprises a user ID and a MAC address associated with the user ID. The information is stored according to the host participating in the group. For example, the information may be collected and stored in known member recruitment processing.

Operation data (guest) 312 is operation data of the operation unit on the game device (guest) 100 side, which is the own device. For example, operation data (guest) 312 comprises touch panel data according to touch panel 116, motion sensor data according to motion sensor 114, and mouse data according to mouse 112.

Operation data (guest) 312 is operation data generated by operation data generation function program 226 by executing processing in Figures 7 to 10 described later.

Game image 314 is a game image transmitted from the game device (host) 100 according to game processing described with reference to Figure 2, and received and stored on the game device (guest) 100 side.

Accumulated delta time 315 is accumulated elapsed time acquired by accumulating from the time of game start, delta time (elapsed time since previous sampling) outputted by operation data generation function program 226 of the guest. This value is initialized at the time of game start, and delta time included in each subsequent operation data is accumulated. Accumulated delta time 315 comprises accumulated delta time for operation data of mouse 112, accumulated delta time for operation data of motion sensor 114, and accumulated delta time for operation data of touch panel 116. Further, accumulated delta time for operation data of touch panel 116 also comprises accumulated delta time for each touch ID.

Accumulated movement amount 316 is a movement amount obtained by accumulating from the time of game start, a differential movement amount attached to operation data of mouse 112 outputted by operation data generation function program 226 of the guest.

Touch release count 317 is data of the number of changes from the state of touch-on (touch input) to the state of touch-off of all fingers (no touch input at all (touch release)) at the own device.

Processed operation data (guest) 318 is processed operation data generated by operation data processing function program 227 by executing processing in Figures 11 to 14 described later. This data is transmitted to the host.

### [E. Processing Flow]

In the following, several processes in the embodiment are described. It should be noted that the processes may comprise other processes or may not comprise a part of the processes. Further, the order of each processing is an example, and for example, processing may be executed simultaneously or may be executed in the reverse order. Further, each processing is described as being divided for the sake of convenience, however, it may be a unified process.

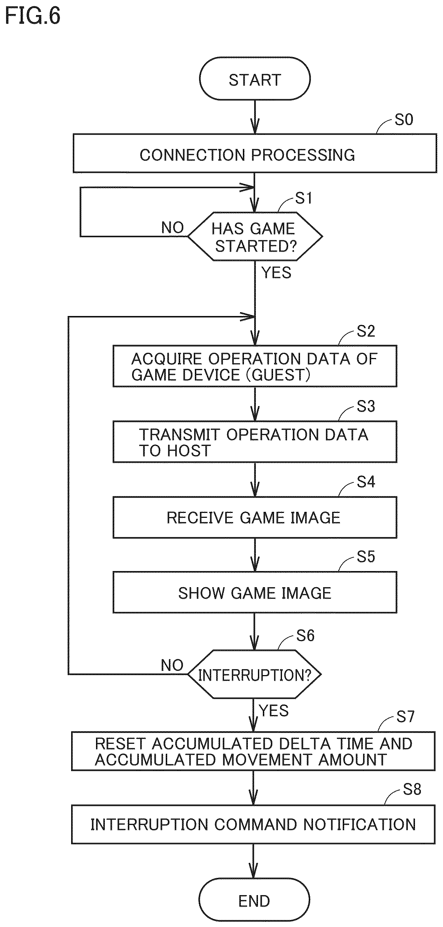

Figure 6 is a flowchart illustrating game processing in game device (guest) 100 according to the embodiment. The processing procedure shown in Figure 6 is realized by execution by SoC 120 of each game device (guest) 100, of guest program 225 included in the system program 200 stored in flash memory 106.

SoC 120 of game device (guest) 100 executes connection processing (step S0). There are various methods of connection processing, and as an example, in the case of local wireless communication, SoC 120 of game device (guest) 100 executes host search processing to search for game device (host) 100 serving as the host using local wireless communication. A connection is requested to the game device (host) 100 found by host search processing, and when the game device (host) 100 permits connection, the game device (guest) 100 receives connection. Thus, connection is completed, and data transmission and reception between the game device (host) 100 and the game device (guest) 100 become possible. Further, host information 311 in DRAM 108 regarding a connection destination is stored when connection is received.

Next, SoC 120 of game device (guest) 100 determines whether a game has started or not (step S1). For example, SoC 120 of game device (guest) 100 may determine that the game has started when a game start instruction is received from game device (host) 100. Alternatively, SoC 120 of game device (guest) 100 may determine that the game has started according to the operation instruction of the user who is the guest.

Next, when SoC 120 of game device (guest) 100 determines that the game is not started (NO in step S1), it maintains the state of step S1, and when it determines that the game is started (YES in step S1), it acquires operation data of the game device (guest) (step S2). SoC 120 of game device (guest) 100 acquires processed operation data (guest) 318 stored in DRAM 108.

Next, SoC 120 of game device (guest) 100 transmits processed operation data (guest) 318 to the host (step S3). Processed operation data (guest) 318 may be transmitted one by one or may be transmitted in a batch.

Next, SoC 120 of game device (guest) 100 receives the game image (step S4). For example, SoC 120 of game device (guest) 100 receives game image 304 transmitted from game device (host) 100 and stores it as game image 314.

Next, SoC 120 of game device (guest) 100 has the game image shown (step S5). For example, SoC 120 of game device (guest) 100 has game image 314 shown on display 104.

Next, SoC 120 of game device (guest) 100 determines whether there is an interruption (step S6). For example, it determines whether a user who is the guest has interrupted game processing. For example, SoC 120 of game device (guest) 100 determines that there is an interruption when the user who is the guest makes transition from a game processing screen to a menu screen according to a specified operation instruction by the user. It should be noted that interruption occurs on the guest side, and game processing at the game device (host) is not interrupted.

In step S6, when SoC 120 of game device (guest) 100 determines that there is an interruption (YES in step S6), it resets accumulated delta time 315 and accumulated movement amount 316 (step S7). Since the game sharing function has been stopped, the accumulated delta time and the accumulated movement amount from start of activation of the game sharing function are reset.

Next, SoC 120 of game device (guest) 100 notifies the host that interruption has occurred on the guest side (step S8). For example, SoC 120 of game device (guest) 100 gives an interruption notification to game device (host) 100. The game device (host) 100 resets the accumulated delta time and the accumulated movement amount on the game device (host) 100 side according to the interruption notification. Then, the processing is ended (end).

On the other hand, in step S6, when SoC 120 of game device (guest) 100 determines that there is no interruption (NO in step S6), the processing returns to step S2 and the above processing is repeated.

In this example, when a specified condition is satisfied (for example, when an interruption operation occurs), SoC 120 of game device (guest) 100 resets the accumulated delta time and the accumulated movement amount on the guest side, and SoC 120 of game device (host) 100 resets the accumulated delta time and the accumulated movement amount for the guest stored on the host side when the specified condition is satisfied (for example, when it is determined that there is an interruption on the guest side). On the other hand, the specified condition is not limited to this and other conditions may be applicable. For example, the processing may be executed according to an instruction from the outside.

The game device 100 (both of the host and the guest) executes processing to acquire operation data in certain cycles and stores it in the memory with information being added. This processing is executed by operation data generation function programs 223 and 226. That is, the game device 100 (host) executes operation data generation function program 223 included in host program 220, and the game device (guest) 100 executes operation data generation function program 226 included in guest program 225. Processing contents of operation data generation functions of host program 220 and guest program 225 are the same.

Operation data generation function programs 223 and 226 store data from mouse 112, motion sensor 114, and touch panel 116 which are hardware in areas for storing operation data (in the host device, in host operation data 302, and in the guest device, in guest operation data 312).

Figure 7 is a diagram illustrating processing by the operation data generation function program of system software according to the embodiment. The processing procedure shown in Figure 7 may be realized by execution by SoC 120 of each game device 100, of operation data generation function programs 223 and 226 stored in flash memory 106. Referring to Figure 7, SoC 120 of game device 100 acquires operation data from the touch panel every first period, adds specified information, and stores it in the area of DRAM 108 for storing operation data (in the host device, in host operation data 302, and in the guest device, in guest operation data 312) (step S9).

Next, SoC 120 of game device 100 acquires operation data from the motion sensor and the mouse every second period, adds specified information, and stores it in the area of DRAM 108 for storing operation data (in the host device, in host operation data 302, and in the guest device, in guest operation data 312) (step S10). Acquisition of operation data every first or second period by operation data generation function programs 223 and 226 is called sampling.

Next, the process returns to step S9 and above processing is repeated. For example, the first period as a cycle may be 0.004 second, and the second period may be 0.005 second.

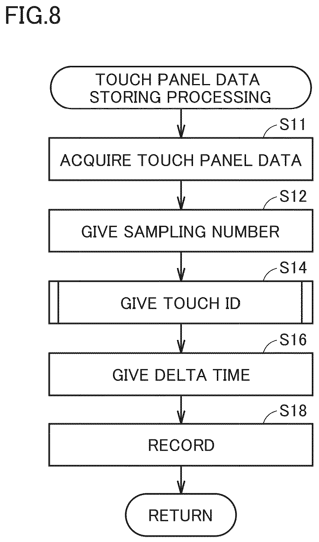

Figure 8 is a flowchart illustrating processing for generating touch panel data in operation data generation processing by the system program according to the embodiment. Referring to Figure 8, SoC 120 of game device 100 acquires touch panel data (step S11). It should be noted that touch panel data is not limited to touch position coordinate data (X, Y) of touch panel 116 by touch-on of one finger, and comprises multiple position coordinate data of touch panel 116 by touch-on of multiple fingers.

Next, SoC 120 of game device 100 assigns a sampling number to acquired touch panel data (step S12). A number incremented for each acquired data is assigned as the sampling number.

Next, SoC 120 of game device 100 assigns the touch ID (step S14). Processing for assigning the touch ID will be described later. For example, when touch panel data acquired at certain timing comprises multiple position coordinate data, the touch ID is assigned to each of the multiple position coordinate data.

Next, SoC 120 of game device 100 assigns delta time (step S16). Delta time is elapsed time since previous sampling time and is data of a sampling interval. For example, delta time of touch panel data may be 0.004 second.

SoC 120 of game device 100 records data (step S18). For example, SoC 120 of game device 100 stores, every first period, in an area for storing operation data (in the host device, in host operation data 302, and in the guest device, in guest operation data 312), touch panel data (the sampling number, the touch ID, the touch coordinates (X, Y), and the delta time) in host operation data 302 or guest operation data 312. When multiple touches exist, this data is recorded for each touch.

The processing then ends (return). It should be noted that the processing in Figure 8 is executed in specified sampling cycles (for example, every 4 ms). The sampling time is the first period, and even in a case where there is no operation by the user as the guest, touch panel data where there is no information regarding the touch ID (the sampling number and the delta time are present) is stored in the storage area for operation data.

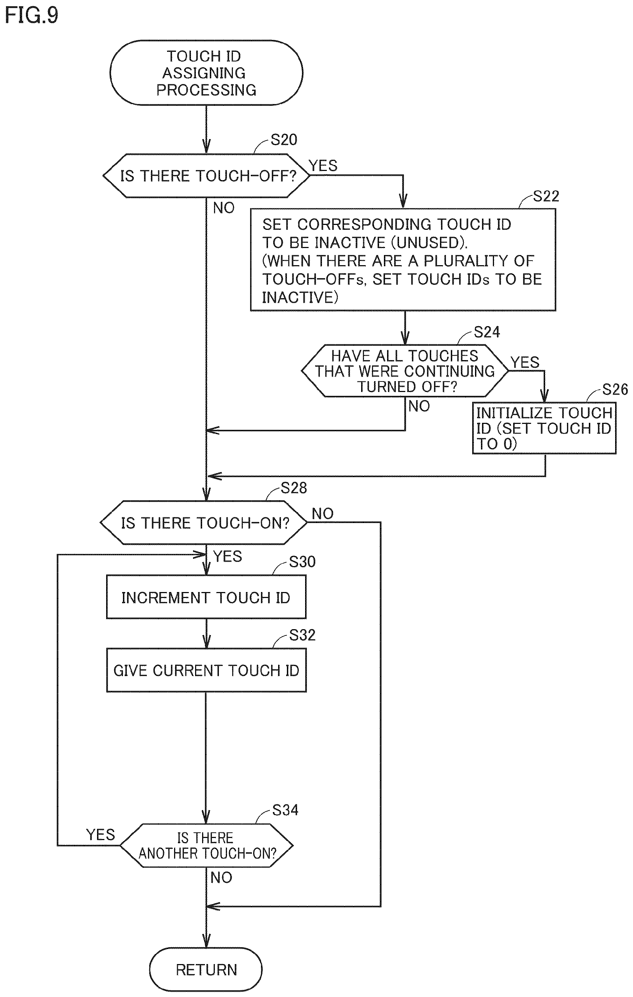

Figure 9 is a subroutine flowchart illustrating processing for assigning the touch ID according to the embodiment. It should be noted that initialization of the touch ID is performed when the flow in Figure 9 is executed for the first time. SoC 120 of game device 100 determines whether there is a touch-off (step S20). That is, it determines whether there is information indicating that a continued touch has ended.

In step S20, when SoC 120 of game device 100 determines that there is a touch-off (YES in step S20), it sets the corresponding touch ID to be inactive (unused) (step S22). It should be noted that if there are multiple touch-offs, each touch ID is set to be inactive.

Next, in step S22, SoC 120 of game device 100 determines whether all touches that were continuing on the touch panel 116 have been turned off (touch release) (step S24).

In step S24, when SoC 120 of game device 100 determines that all touches that were continuing on the touch panel 116 have been turned off (touch release) (YES in step S24), it initializes the touch ID (step S26). That is, it sets the touch ID to 0. That is, when there is such touch release, the touch ID is reset.

On the other hand, when SoC 120 of game device 100 determines that not all touches that were continuing on the touch panel 116 have been turned off (touch release) (NO in step S24), the processing proceeds to step S28.

In step S20, when SoC 120 of game device 100 determines that there is no touch-off (YES in step S20), it determines whether there is a touch-on (step S28). That is, it determines whether there is a newly occurred touch this time.

In step S28, when SoC 120 of game device 100 determines that there is a touch-on (YES in step S28), it increments the touch ID (step S30).

Next, SoC 120 of game device 100 assigns the current touch ID (step S32).

Next, SoC 120 of game device 100 determines whether there is another touch-on (step S34).

In step S34, when SoC 120 of game device 100 determines that there is another touch-on (YES in step S34), the processing returns to step S30 and the above processing is repeated.

On the other hand, in step S34, when SoC 120 of game device 100 determines that there is no other touch ID (NO in step S34), the processing ends (return).

On the other hand, in step S28, when SoC 120 of game device 100 determines that there is no touch-on (NO in step S28), the processing ends (return).

By the processing in Figure 9, for example, when a touch-on is first performed with a thumb, a touch ID "1" is assigned to that touch, and when a touch-on is next performed with an index finger, a touch ID "2" is assigned to that touch. Thereafter, similarly, the touch ID numbers are incremented in order. The incremented number is retained until a touch release (all touches are turned off) occurs. Therefore, when the index finger is subsequently touched off, the touch ID "2" becomes inactive, but when a touch-on is again performed with the index finger (or another finger), a touch ID "3" is assigned to that touch. It should be noted that when a touch is performed with the thumb, the ID "1" is assigned to that touch, then when a touch is performed with the index finger, the ID "2" is assigned to that touch, and then when the thumb and the index finger are touched off (touch release) and then a touch is performed with a middle finger etc., the ID "1" is assigned. That is, when there is a touch release, the incremented ID is reset.

It should be noted that in the recording of touch data in S18 in Figure 8, only data of active touch IDs is recorded (data of inactive touch IDs is not recorded).

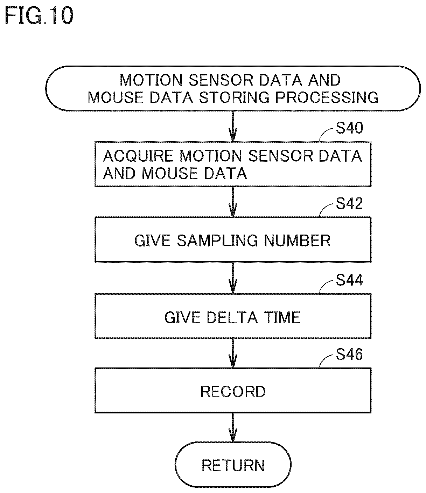

Figure 10 is a flowchart illustrating processing for generating motion sensor data and mouse data in operation data generation processing by the system program according to the embodiment. Referring to Figure 10, SoC 120 of game device 100 acquires the motion sensor data and the mouse data (step S40). For example, the motion data includes data of acceleration values, angular velocity values, and rotation angles etc. calculated from the angular velocity values outputted from motion sensor 114. The mouse data includes data of changed movement amounts (differential movement amounts) in the horizontal (X) direction and the vertical (Y) direction from the position at previous sampling.

Next, SoC 120 of game device 100 assigns sampling numbers to the acquired motion sensor data and mouse data, respectively (step S42). A number incremented for each acquired data is assigned as the sampling number.

Next, SoC 120 of game device 100 assigns delta time (step S44). The delta time is the elapsed time since the previous sampling time and is data of the sampling interval at which the operation data generation function program acquires operation data from the motion sensor and the mouse. For example, the delta time of the motion sensor data and the mouse data may both be 0.005 second.

SoC 120 of game device 100 records data (step S46). For example, SoC 120 of game device 100 stores motion sensor data (the sampling number, the acceleration value, the angular velocity value, the rotation angle etc. calculated from the angular velocity value, and the delta time) in host operation data 302 or guest operation data 312. SoC 120 of game device 100 stores mouse data (the sampling number, the differential movement amount in the horizontal (X) direction, the differential movement amount in the vertical (Y) direction, and the delta time) in host operation data 302 or guest operation data 312.

The processing then ends. It should be noted that the processing in Figure 10 is executed in specified sampling cycles (for example, every 5 ms).

Game device (guest) 100 executes operation data processing shown in Figure 11. This is processing for processing the guest operation data stored as operation data 312 as described above. The processed operation data is transmitted to the host. By performing this processing, it serves as a countermeasure when the guest operation data does not reach the host (is lost).

Figure 11 is a flowchart illustrating the operation data processing according to the embodiment. This processing is executed, for example, once per game frame. Referring to Figure 11, the system program (transmission data processing program) receives an instruction to start the game from the game program and starts accumulation of the accumulated delta time and the accumulated movement amount (step S52). At the time of start of accumulation, SoC 120 of game device (guest) 100 initializes the values of the accumulated delta time, the accumulated movement amount, and the touch release count upon receiving the instruction to start the game.

Next, SoC 120 of game device (guest) 100 executes touch panel data processing (step S54). Details of the touch panel data processing will be described later.

Next, SoC 120 of game device (guest) 100 executes motion sensor data processing (step S56). Details of the motion sensor data processing will be described later.

Next, SoC 120 of game device (guest) 100 executes mouse data processing (step S58). Details of the mouse data processing will be described later.

Then, the processing returns to step S54 and the above processing is repeated.

Figure 12 is a flowchart illustrating the touch panel data processing (subroutine processing in step S54 in Figure 11) according to the embodiment. Referring to Figure 12, SoC 120 of game device (guest) 100 extracts touch panel data from operation data (guest) 312 by FIFO (step S70). For example, it may extract the touch panel data one by one, or may extract multiple data (for example, 32 pieces of data) together.

Next, SoC 120 of game device (guest) 100 calculates the accumulated delta time (step S71). For example, the accumulated delta time is initialized when there is an instruction to activate (or start) the game sharing function, and then is calculated by accumulating delta time each time operation data is acquired. SoC 120 of game device (guest) 100 calculates the accumulated delta time by adding the delta time of the touch panel data extracted from operation data (guest) 312 to accumulated delta time 315 (touch panel) (this processing is performed for each touch ID). Alternatively, SoC 120 of game device (guest) 100 may calculate the accumulated delta time by adding the delta time of the touch panel data to elapsed time since the start of accumulation.

Next, SoC 120 of game device (guest) 100 determines whether there is a touch release (step S72). For example, SoC 120 of game device (guest) 100 determines whether there is a change from a state where there is some touch to a state where all fingers are touched off (no touch input at all). The change from the state where there is some touch to the state where all fingers are touched off is called touch release. It may be determined that there is a touch release when all previous touch IDs have disappeared.

Next, in step S72, when SoC 120 of game device (guest) 100 determines that there is a touch release (YES in step S72), it counts up the touch release count (step S76). For example, when SoC 120 of game device (guest) 100 determines that there is a touch release, it increments touch release count 317.

Next, SoC 120 of game device (guest) 100 resets the accumulated delta time of each touch ID (step S77). For example, SoC 120 of game device (guest) 100 resets accumulated delta time 315 stored for each touch ID. In this example, a case where accumulated delta time 315 of all touch IDs is reset is described, however, only the accumulated delta time of the first touch ID may be reset.

On the other hand, in step S72, when SoC 120 of game device (guest) 100 determines that there is no touch release (NO in step S72), it replaces the delta time in the touch panel data (the sampling number, the touch ID, the touch coordinates (X, Y), and the delta time) stored in the operation data (guest) 312 with the accumulated delta time (touch panel), and by adding the touch release count 317, it generates processed touch panel data (the sampling number, the touch ID, the touch coordinates (X, Y), the accumulated delta time, and the touch release count) (step S74).

Next, SoC 120 of game device (guest) 100 stores the processed touch panel data (step S75). For example, SoC 120 of game device (guest) 100 stores it as processed operation data (guest) 318 (touch panel data (the sampling number, the touch ID, (X, Y), the accumulated delta time, and the touch release count)). It should be noted that when there are multiple touches, this data is stored for each touch. Then, the processing ends (return).

When the processing for all the touch panel data stored in the operation data (guest) 312 has been completed, the processing ends.

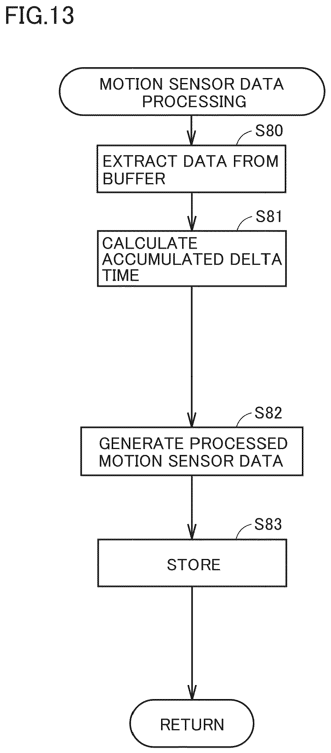

Figure 13 is a flowchart illustrating motion sensor data processing according to the embodiment (subroutine processing in step S56 in Figure 11). Referring to Figure 13, SoC 120 of game device (guest) 100 extracts data from the operation data (guest) 312 (step S80). For example, SoC 120 of game device (guest) 100 extracts by FIFO, motion sensor data stored in the operation data (guest) 312. For example, it may extract the motion sensor data one by one, or it may extract multiple data together. SoC 120 of game device (guest) 100 calculates the accumulated delta time (motion sensor) by adding the delta time included in the motion sensor data extracted from the operation data (guest) 312 to the accumulated delta time 315 (motion sensor) (step S81). For example, the accumulation of the accumulated delta time is started according to the instruction to activate the game sharing function, and then the accumulated delta time is calculated. The SoC 120 of game device (guest) 100 calculates the accumulated delta time by sequentially adding the delta time of the motion sensor data stored in the operation data (guest) 312. Alternatively, SoC 120 of game device (guest) 100 may calculate the accumulated delta time by adding the delta time of the motion sensor data to the elapsed time since start of accumulation.

Next, the SoC 120 of game device (guest) 100 replaces the delta time in the motion sensor data (the sampling number, the acceleration value, the angular velocity value, the rotation angle calculated from the angular velocity value etc., and the delta time) stored in the operation data (guest) 312 with the accumulated delta time, and generates processed motion sensor data (the sampling number, the acceleration value, the angular velocity value, the rotation angle calculated from the angular velocity value etc., and the accumulated delta time) (step S82).

Next, SoC 120 of game device (guest) 100 stores the processed motion sensor data (step S83). For example, SoC 120 of game device (guest) 100 stores it as processed operation data (guest) 318 (motion sensor data (the sampling number, the acceleration value, the angular velocity value, the rotation angle calculated from the angular velocity value etc., and the accumulated delta time)). Then, the processing ends (return).

Then, when the processing for all the motion sensor data stored in the operation data (guest) 312 has been completed, the processing ends (return).

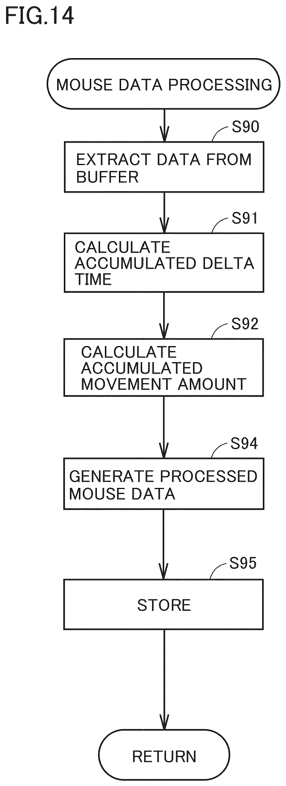

Figure 14 is a flowchart illustrating mouse data processing according to the embodiment (subroutine in step S58 in Figure 11). Referring to Figure 14, SoC 120 of game device (guest) 100 extracts data from the operation data (guest) 312 (step S90). For example, SoC 120 of game device (guest) 100 extracts by FIFO, mouse data stored in the operation data (guest) 312. For example, it may extract the mouse data one by one, or it may extract multiple data together.

Next, SoC 120 of game device (guest) 100 calculates the accumulated delta time (mouse data) by adding the delta time in the mouse data (the sampling number, the differential movement amount in the horizontal (X) direction, the differential movement amount in the vertical (Y) direction, and the delta time) extracted from the operation data (guest) 312 to the accumulated delta time 315 (mouse data) (step S91). For example, the accumulation of the accumulated delta time is started according to the instruction to activate the game sharing function, and then the accumulated delta time is calculated. SoC 120 of game device (guest) 100 calculates the accumulated delta time (mouse data) by sequentially adding the delta time of the mouse data stored in the operation data (guest) 312. Alternatively, SoC 120 of game device (guest) 100 may calculate the accumulated delta time by adding the delta time of the mouse data to the elapsed time since the start of accumulation.

Next, SoC 120 of game device (guest) 100 calculates the accumulated movement amount (step S92). For example, by adding the differential movement amount in the X direction and the differential movement amount in the Y direction in the mouse data (the sampling number, the differential movement amount in the horizontal (X) direction, the differential movement amount in the vertical (Y) direction, and the delta time) extracted from the operation data (guest) 312 to X and Y of the accumulated movement amount 316, respectively, the accumulated movement amount is calculated. SoC 120 of game device (guest) 100 calculates the accumulated movement amount by sequentially adding the differential movement amount of the mouse data stored in the operation data (guest) 312. The accumulated movement amount includes the accumulated movement amount in the horizontal (X) direction obtained by sequentially adding the differential movement amount in the horizontal (X) direction and the accumulated movement amount in the vertical (Y) direction obtained by sequentially adding the differential movement amount in the vertical (Y) direction. Alternatively, SoC 120 of game device (guest) 100 may calculate the accumulated movement amount by adding the differential movement amount of the mouse data to the movement amount from the time when accumulation started.

Next, by replacing the delta time in the mouse data (the sampling number, the differential movement amount in the horizontal (X) direction, the differential movement amount in the vertical (Y) direction, and the delta time) extracted from the operation data (guest) 312 with the accumulated delta time and replacing the differential movement amounts in X and Y with the accumulated movement amounts, SoC 120 of game device (guest) 100 generates processed mouse data (the sampling number, the accumulated movement amount in the horizontal (X) direction, the accumulated movement amount in the vertical (Y) direction, and the accumulated delta time) (step S94).

Next, SoC 120 of game device (guest) 100 stores the processed mouse data (step S95). For example, SoC 120 of game device (guest) 100 stores it as processed operation data (guest) 318 (mouse data (the sampling number, the accumulated movement amount in the horizontal (X) direction, the accumulated movement amount in the vertical (Y) direction, and the accumulated delta time)). Then, when the processing for all the mouse data stored in the operation data (guest) 312 has been completed, the processing ends (return).

The processed touch panel data, the processed motion sensor data, and the processed mouse data generated in this manner are transmitted to the host in step S3 in Figure 6.

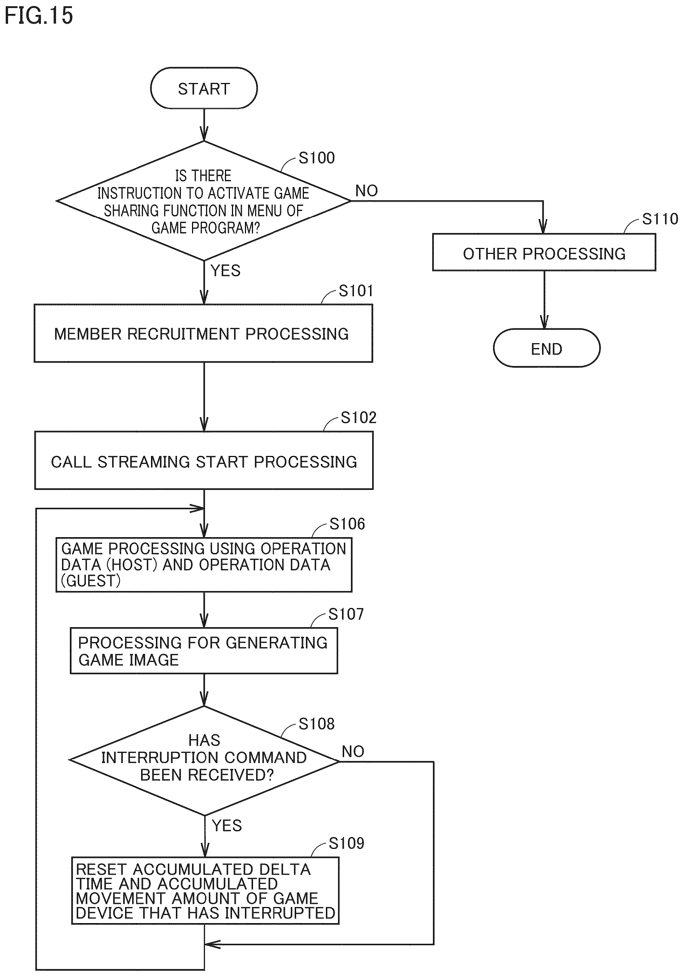

Figure 15 is a flowchart illustrating game processing in game device (host) 100 according to the embodiment. Referring to Figure 15, SoC 120 of game device (host) 100 determines whether activation of the game sharing function has been instructed on the menu screen of the game program (step S50).

In step S50, SoC 120 of game device (host) 100 executes member recruitment processing (step S101) when it determines that there is an instruction to activate game sharing (YES in step S100). For example, the member recruitment processing may recruit group members until the number of guests supported by the game program reaches the upper limit value, or may interrupt the processing even when the number of guests does not reach the upper limit value. There are various methods for the member recruitment processing, and as an example, the case of local wireless communication is described. SoC 120 of game device (host) 100-1 executes advertising processing and waits for connection from other game devices 100-2 etc. by guests. When SoC 120 of game device (host) 100 determines that there is a connection by the guest, it transmits connection and game start instructions to game device 100 of the guest who requested connection. For example, the connection and game start instructions include host information. The host information is data including the user ID and MAC address data of the game device serving as the host. Game device (guest) 100 that received the connection and game start instructions stores host information 311 in DRAM 108 based on the data. SoC 120 of game device (host) 100 generates and stores guest member information. For example, SoC 120 of game device (host) 100 generates and registers necessary information as guest member information 301 in DRAM (host) 108. As an example, SoC 120 of game device (host) 100 stores the user ID of the guest who requested connection and the MAC address associated with the user ID. The user ID and the MAC address are data acquired from game device 100 of the guest who requested connection during the advertising processing.

Next, SoC 120 of game device (host) 100 executes a call for streaming start processing (step S102). For example, SoC 120 of game device (host) 100 calls the streaming function program 221 included in the game sharing function program 210 in flash memory 106 to start streaming transmission processing (processing for sequentially transmitting generated game images). In step S107 described later, SoC 120 of game device (host) 100 performs processing for streaming transmission of game image 304, which is image data generated by game processing using operation data of the host and the guest, to game device (guest) 100 via communication module 102.

Next, SoC 120 of game device (host) 100 executes the game processing based on the game program 240 using the operation data (host) 302 and the operation data (guest) 303 (step S106). For example, SoC 120 of game device (host) 100 may execute the game processing based on the game program 240 using at least one of the host-side operation data 302 (touch panel data (the sampling number, the touch ID, the touch coordinates (X, Y), and the delta time)) and the guest-side operation data 303 (touch panel data (the sampling number, the touch ID, the touch coordinates (X, Y), and the delta time)). Further, the operation data (host) 302 and the operation data (guest) 303 may use all of the touch panel data, the motion sensor data, and the mouse data, and may further include other operation data. Further, at least two of the touch panel data, the motion sensor data, and the mouse data may be used.

Next, SoC 120 of game device (host) 100 executes game image generation processing (step S107). SoC 120 stores it as the generated game image 304. SoC 120 may store the common game image for the host and the guest as the game image 304, or may store individual game images.

Next, SoC 120 of game device (host) 100 determines whether an interruption notification has been received (step S108). For example, SoC 120 of game device (host) 100 determines whether the interruption notification described with reference to step S62 of Figure 11 has been received from game device (guest) 100.

In step S108, when SoC 120 of game device (host) 100 determines that the interruption notification has been received (YES in step S108), it resets the accumulated delta time and the accumulated movement amount of the corresponding game device 100 that transmitted the interruption instruction (step S109). For example, SoC 120 of game device (host) 100 resets the accumulated delta time 305 and the accumulated movement amount 306 for all of the touch panel data, the motion sensor data, and the mouse data of the corresponding game device (guest) 100 that transmitted the interruption instruction. Further, since the accumulated delta time of the touch panel data exists for each touch ID, the accumulated delta time for all touch IDs may be reset.

SoC 120 of game device (host) 100 then continues the processing in step S106 with other game devices (guest) 100 in which the game processing is continuing.

On the other hand, in step S108, when SoC 120 of game device (host) 100 determines that the interruption notification has not been received (NO in step S108), the processing returns to step S106 and the above processing is repeated.

Figure 16 is a flowchart illustrating data acquisition processing for acquiring operation data (guest) according to the embodiment. This processing is processing for converting processed operation data 318 transmitted from game device (guest) 100 back into operation data to be used by the game program. The processing procedure shown in Figure 16 may be realized by SoC 120 of game device (host) 100 executing the operation data (guest) acquisition function program 222 of the system program stored in flash memory 106. This processing is executed in parallel with the processing in Figure 15. Further, this processing is performed at the timing when the processed operation data 318 is received.

Referring to Figure 16, SoC 120 of game device (host) 100 executes touch panel data (guest) acquisition processing (step S90). Details of the touch panel data (guest) acquisition processing will be described later.

Next, SoC 120 of game device (host) 100 executes motion sensor data (guest) acquisition processing (step S92). Details of the motion sensor data (guest) acquisition processing will be described later.

Next, SoC 120 of game device (host) 100 executes mouse data (guest) acquisition processing (step S94). Details of the mouse data (guest) acquisition processing will be described later.

Next, the processing returns to step S90.

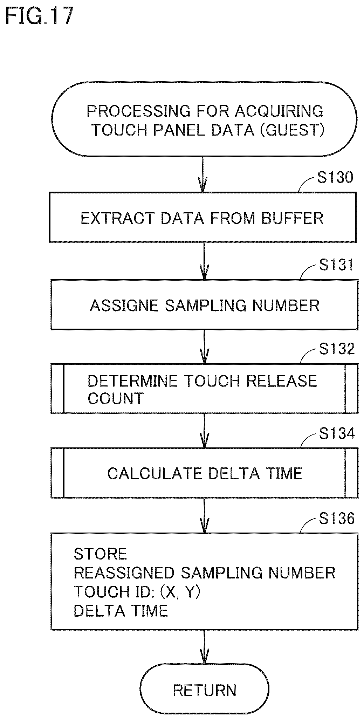

Figure 17 is a subroutine flowchart illustrating touch panel data (guest) acquisition processing according to the embodiment. Referring to Figure 17, SoC 120 of game device (host) 100 extracts by FIFO, the processed operation data from a reception buffer in which processed operation data 318 transmitted from game device (guest) 100 is stored (step S130). For example, SoC 120 of game device (host) 100 extracts the processed touch panel data stored (buffered) in the reception buffer. For example, it may extract the processed touch panel data one by one, or may extract multiple data (for example, 32 pieces) together.

Next, SoC 120 of game device (host) 100 assigns a sampling number (step S131). For example, SoC 120 of game device (host) 100 may reassign a sampling number to each touch panel data received from game device (guest) 100 and stored in the reception buffer. SoC 120 of game device (host) 100 reassigns sampling numbers according to the order of the touch panel data stored in the reception buffer and updates the sampling numbers of the touch panel data. It should be noted that, when packet loss occurs, a discrepancy arises between the sampling number assigned by the guest in step S12 and the sampling number assigned by the host in step S131.

Next, SoC 120 of game device (host) 100 determines the touch release count (step S132). Determination of the touch release count will be described later.

Next, SoC 120 of game device (host) 100 calculates delta time (step S134). Calculation of the delta time will be described later.

Next, SoC 120 of game device (host) 100 stores operation data 303 (touch panel data (the reassigned sampling number, the touch ID (X, Y), and the delta time)) (step S136). When there are multiple touches, this processing is performed on data for each touch ID.

When all touch panel data stored in the reception buffer has been processed, the processing ends (return).

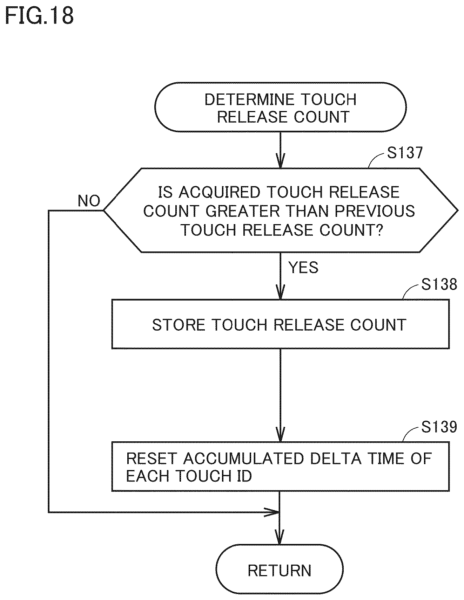

Figure 18 is a subroutine flowchart illustrating processing for determining the touch release count according to the embodiment. Referring to Figure 18, SoC 120 of game device (host) 100 determines whether the touch release count included in the touch panel data extracted from the reception buffer is greater than the previously extracted touch release count (step S137). For example, SoC 120 of game device (host) 100 compares the currently extracted touch release count 317 with the stored touch release count 307 (the touch release count included in the previously extracted touch panel data), and determines whether the currently extracted touch release count is greater than the stored touch release count 307.

In step S137, when SoC 120 of game device (host) 100 determines that the currently extracted touch release count is greater than the previous touch release count (YES in step S137), it stores the currently extracted touch release count (step S138).

Next, SoC 120 of game device (host) 100 resets the accumulated delta time for each touch ID (step S139). For example, SoC 120 of game device (host) 100 resets the accumulated delta time 305 stored for each touch ID. In this example, the case of resetting the accumulated delta time 305 for all touch IDs is described, however, only the accumulated delta time for the first touch ID may be reset.

The processing then ends (return).

On the other hand, in step S137, when SoC 120 of game device (host) 100 determines that the currently extracted touch release count is not greater than, that is, equal to, the previous touch release count (NO in step S137), it skips steps S138 and S139 and quits the processing (return).

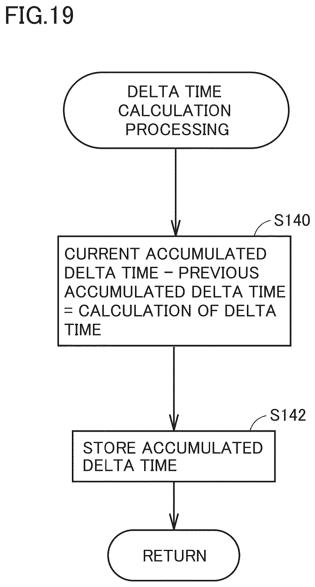

Figure 19 is a flowchart illustrating delta time calculation processing according to the embodiment. Referring to Figure 19, SoC 120 of game device (host) 100 reads by FIFO, the touch panel data stored in the reception buffer, and calculates a delta time, which is differential elapsed time, by subtracting the previous accumulated delta time from the accumulated delta time included in each touch panel data (step S140). For example, when the current accumulated delta time 315 is "3.004" and the previous accumulated delta time 305 is "3.000", the delta time is "0.004".

Next, SoC 120 of game device (host) 100 stores the currently extracted accumulated delta time (step S142). Regarding the touch panel data, touch panel data for each touch ID is included, and in that case, the above-described processing is executed on each touch panel data for each touch ID.

The processing then ends (return).

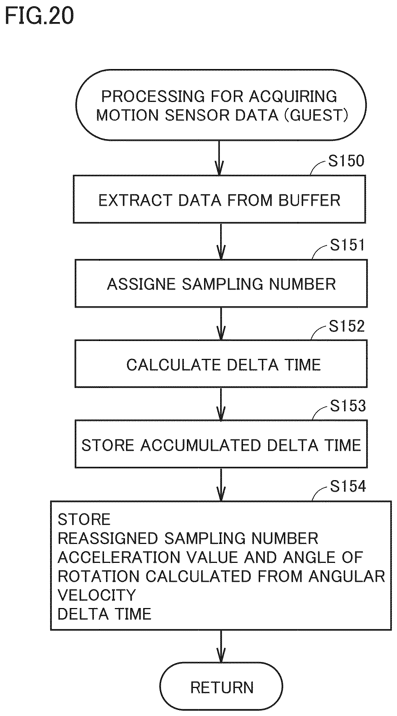

Figure 20 is a subroutine flowchart illustrating motion sensor data (guest) acquisition processing according to the embodiment. Referring to Figure 20, SoC 120 of game device (host) 100 extracts data from the reception buffer in which processed operation data 318 transmitted from game device (guest) 100 is stored (step S150). For example, SoC 120 of game device (host) 100 extracts by FIFO, the motion sensor data stored in the reception buffer. For example, it may extract the motion sensor data one by one, or may extract multiple data together.

Next, SoC 120 of game device (host) 100 assigns a sampling number (step S151). This processing is the same processing as step S131 described above.

Next, SoC 120 of game device (host) 100 calculates a delta time (step S152). For example, SoC 120 of game device (host) 100 calculates the delta time by subtracting the accumulated delta time included in the previously extracted motion sensor data from the accumulated delta time included in the currently extracted motion sensor data. For example, when the current accumulated delta time 315 of the motion sensor data is "3.005" and the previous accumulated delta time 305 is "3.000", the delta time is "0.005".

Next, SoC 120 of game device (host) 100 stores the currently extracted accumulated delta time (step S153). For example, SoC 120 of game device (host) 100 stores the current accumulated delta time 315 of the motion sensor data as the accumulated delta time 305.

Next, SoC 120 of game device (host) 100 stores the reassigned sampling number, the acceleration value, the rotation angle calculated from the angular velocity, and the delta time as operation data (motion sensor data) 303 (step S154).

When all motion sensor data stored in the reception buffer has been processed, the processing ends (return).

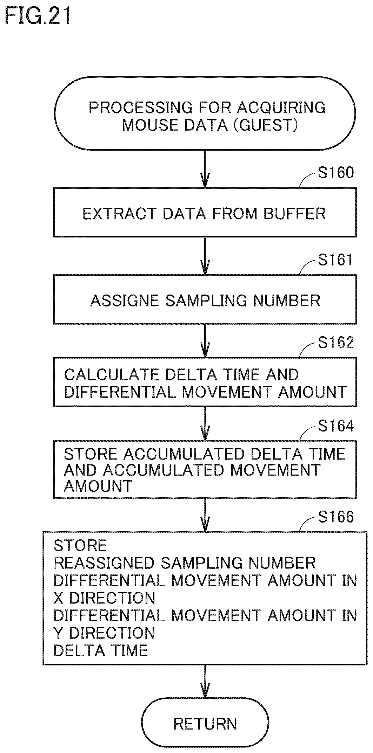

Figure 21 is a subroutine flowchart illustrating mouse data (guest) acquisition processing according to the embodiment. Referring to Figure 21, SoC 120 of game device (host) 100 extracts by FIFO, mouse data from the reception buffer in which processed operation data 318 transmitted from game device (guest) 100 is stored (step S160). For example, SoC 120 of game device (host) 100 extracts the mouse data stored in the reception buffer. For example, it may extract the mouse data one by one, or may extract multiple data together.

SoC 120 of game device (host) 100 assigns a sampling number (step S161). This processing is the same processing as step S131 described above.

Next, SoC 120 of game device (host) 100 calculates delta time and the differential movement amount (step S162). For example, SoC 120 of game device (host) 100 calculates the delta time by subtracting the accumulated delta time included in the previously extracted mouse data from the accumulated delta time included in the currently extracted mouse data. For example, when the current accumulated delta time 315 of the mouse data is "3.005" and the previous accumulated delta time 305 is "3.000", the delta time is "0.005". Further, SoC 120 of game device (host) 100 calculates the differential movement amount by subtracting the accumulated movement amount included in the previously extracted mouse data from the accumulated movement amount included in the currently extracted mouse data. For example, it calculates the differential movement amount in the X direction by subtracting the previous accumulated movement amount in the X direction from the current accumulated movement amount in the X direction. It calculates the differential movement amount in the Y direction by subtracting the previous accumulated movement amount in the Y direction from the current accumulated movement amount in the Y direction.

Next, SoC 120 of game device (host) 100 stores the currently extracted accumulated delta time and accumulated movement amount (step S164). For example, SoC 120 of game device (host) 100 stores the currently extracted accumulated delta time 315 of the mouse data as the accumulated delta time 305.

Next, SoC 120 of game device (host) 100 stores the reassigned sampling number, the differential movement amount in the horizontal (X) direction, the differential movement amount in the vertical (Y) direction, and the delta time as operation data (mouse data) 303 (step S166).

When all mouse data stored in the reception buffer has been processed, the processing ends (return).

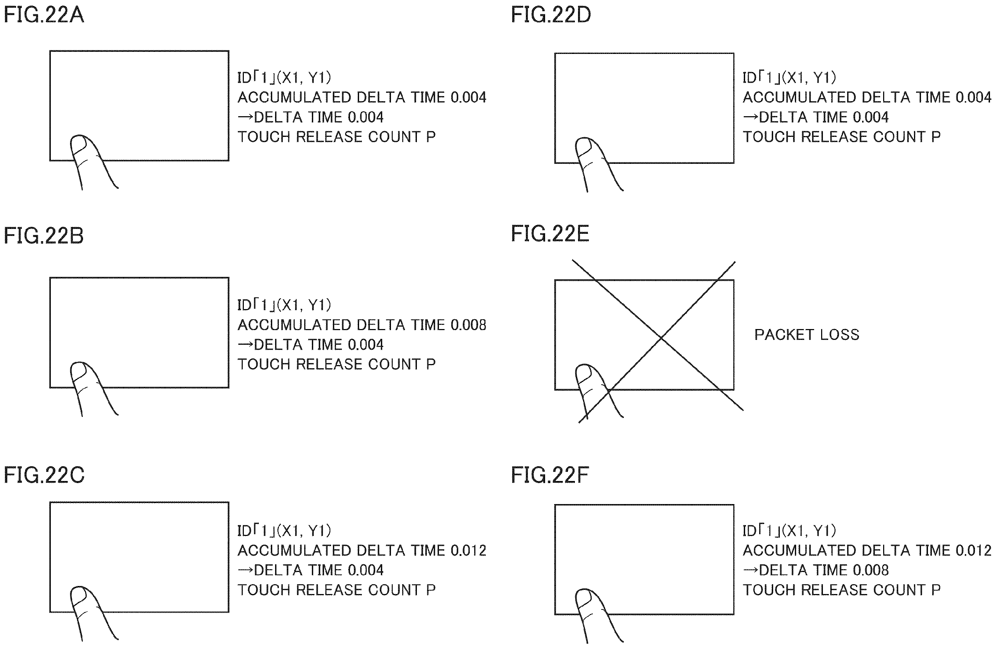

Figures 22A to 22F are a diagram illustrating a specific example (No. 1) when packet loss occurs according to the embodiment. Referring to Figure 22A, a case is shown in which, for example, the touch panel 116 is operated with a thumb in game device (guest) 100. In this example, SoC 120 of game device (guest) 100 assigns the touch ID "1" to touch coordinates (X1, Y1), and transmits operation data with accumulated delta time "0.004" to game device (host) 100. SoC 120 of game device (host) 100 calculates delta time "0.004" by subtracting the stored accumulated delta time ("0") from the current accumulated delta time ("0.004") of the touch ID "1". It stores accumulated delta time "0.004" corresponding to the touch ID "1". Since this is the first touch, the previous accumulated delta time of the touch ID "1" is the initial value "0".

Next, referring to Figure 22B, a case is shown in which, for example, an operation is performed with touch on the touch panel 116 with the thumb being continued during the next sampling in game device (guest) 100. In this example, SoC 120 of game device (guest) 100 continuously assigns the touch ID "1" to the touch coordinates (X1, Y1), and transmits operation data with accumulated delta time "0.008" to game device (host) 100. In this case, SoC 120 of game device (host) 100 calculates delta time "0.004" by subtracting the previous accumulated delta time "0.004" corresponding to the touch ID "1" from the current accumulated delta time "0.008" corresponding to the touch ID "1". SoC 120 of game device (host) 100 stores accumulated delta time "0.008" corresponding to the touch ID "1".

Next, referring to Figure 22C, a case is shown in which, for example, an operation is performed with touch on the touch panel with the thumb being continued during the next sampling in game device (guest) 100. In this example, SoC 120 of game device (guest) 100 continuously assigns the touch ID "1" to the touch coordinates (X1, Y1), and transmits operation data with accumulated delta time "0.012" to game device (host) 100. In this case, SoC 120 of game device (host) 100 calculates delta time "0.004" by subtracting the previous accumulated delta time "0.008" corresponding to the touch ID "1" from the current accumulated delta time "0.012" corresponding to the touch ID "1". SoC 120 of game device (host) 100 stores accumulated delta time "0.012" corresponding to the touch ID "1". Since the touch-on state is continuing, the touch release count P does not change.

On the other hand, a case in which packet loss occurs is described next.

Referring to Figure 22D, a case is shown in which, for example, the touch panel is operated with the thumb in game device (guest) 100. In this example, SoC 120 of game device (guest) 100 assigns the touch ID "1" to the touch coordinates (X1, Y1), and transmits operation data with accumulated delta time "0.004" to game device (host) 100. In this case, SoC 120 of game device (host) 100 determines that there is no previous accumulated delta time for the touch ID "1" and that this is the first operation, and sets "0.004" as the initial value for the accumulated delta time of the touch ID "1". SoC 120 of game device (host) 100 calculates delta time "0.004" by subtracting the previous accumulated delta time ("0") from the current accumulated delta time ("0.004") of the touch ID "1". It stores accumulated delta time "0.004" corresponding to the touch ID "1".

Next, referring to Figure 22E, a case is shown in which packet loss occurs for data when an operation is performed with touch on the touch panel with the thumb being continued during the next sampling in game device (guest) 100. In this case, SoC 120 of game device (host) 100 does not perform the delta time calculation described with reference to Figure 22B because the packet does not exist.

Next, referring to Figure 22F, a case is shown in which, for example, , an operation is performed with touch on the touch panel with the thumb being continued during the next sampling in game device (guest) 100. In this example, SoC 120 of game device (guest) 100 continuously assigns the touch ID "1" to the touch coordinates (X1, Y1), and transmits operation data with accumulated delta time "0.012" to game device (host) 100. In this case, SoC 120 of game device (host) 100 calculates delta time "0.008" by subtracting the previous accumulated delta time "0.004" corresponding to the touch ID "1" from the current accumulated delta time "0.012" corresponding to the touch ID "1". SoC 120 of game device (host) 100 stores accumulated delta time "0.012" corresponding to the touch ID "1". Since the touch-on state is continuing, the touch release count P does not change.

Therefore, even in a case where packet loss occurs, it is possible to calculate proper delta time and provide it as operation data to the game program which is the application program. For example, the game program which is the application program may calculate an operation speed from the operation data and the delta time based on the delta time, or may estimate operation data at intermediate time (such as a timing at which packet loss occurred).

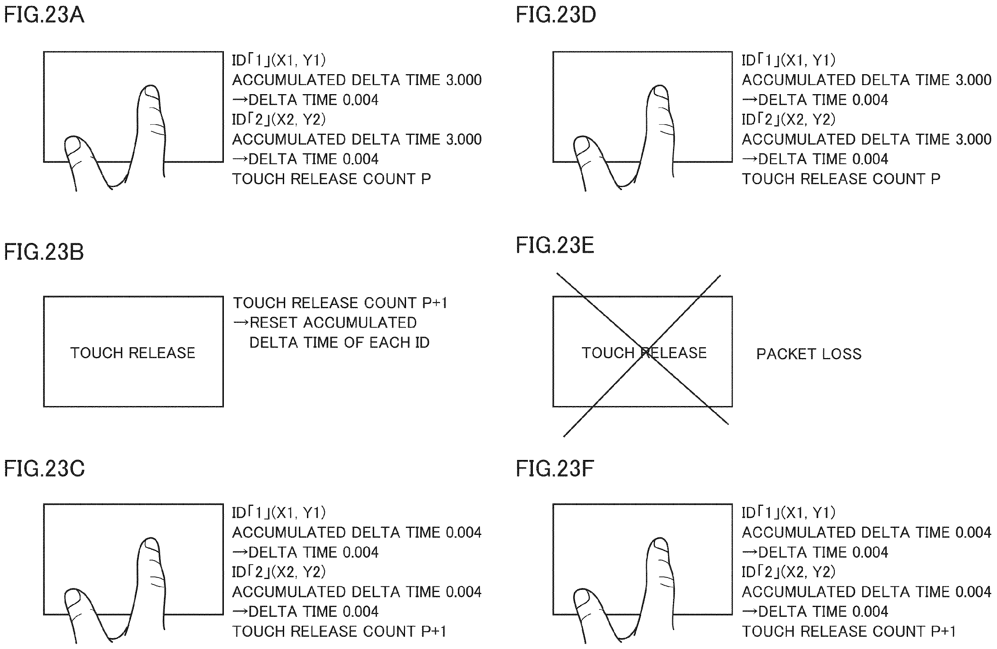

Figures 23A to 23F are a diagram illustrating a specific example (No. 2) when packet loss occurs according to the embodiment. Referring to Figure 23A, a case is shown in which, for example, a touch panel is being operated with the thumb and the index finger in the game device (guest) 100. In this example, SoC 120 of the game device (guest) 100 assigns touch IDs "1" and "2" corresponding to touch coordinates (X1, Y1) and (X2, Y2), respectively, and transmits operation data to which accumulated delta time "3.000" is also assigned to the game device (host) 100 (at the time point of Figure 23A, a continuous touch has been performed with the thumb and the index finger for 3.000 seconds). SoC 120 of the game device (host) 100 subtracts the previously stored accumulated delta time ("2.996") from the current accumulated delta time ("3.000") for touch IDs "1" and "2", and calculates delta time "0.004". Then, the current accumulated delta time "3.000" is stored.

Next, referring to Figure 23B, a case is shown in which, for example, an operation to turn off the touch of the thumb and the index finger is performed at the time of the next sampling in the game device (guest) 100. That is, a case where a touch release is performed is shown. In a case where a touch release is performed, SoC 120 of game device (guest) 100 deactivates the touch IDs "1" and "2", and transmits information indicating that there is no touch and the touch release count P+1. Since the data of the touch IDs "1" and "2" has disappeared, SoC 120 of the game device (host) 100 resets the accumulated delta time of the touch IDs "1" and "2".

Next, referring to Figure 23C, a case is shown in which, for example, the touch panel is operated again with the thumb and the index finger at the time of the next sampling in the game device (guest) 100. In this example, SoC 120 of the game device (guest) 100 assigns the touch IDs "1" and "2" corresponding to touch coordinates (X1, Y1) and (X2, Y2), respectively, and transmits operation data to which accumulated delta time "0.004" is also assigned to the game device (host) 100. SoC 120 of the game device (host) 100 obtains delta time "0.004" by subtracting reset accumulated delta time "0" from the current accumulated delta time "0.004" corresponding to the touch IDs "1" and "2".

On the other hand, a case in which packet loss occurs will be described.

Referring to Figure 23D, a case is shown in which, for example, the touch panel is being operated with the thumb and the index finger in the game device (guest) 100. In this example, SoC 120 of the game device (guest) 100 assigns the touch IDs "1" and "2" corresponding to touch coordinates (X1, Y1) and X2, Y2), respectively, and transmits operation data to which accumulated delta time "3.000" is also assigned to the game device (host) 100 (at the time point of Figure 23D, a continuous touch has been performed with the thumb and the index finger for 3.000 seconds). SoC 120 of the game device (host) 100 calculates delta time "0.004" by subtracting the previously stored accumulated delta time ("2.996") from the current accumulated delta time ("3.000") for the touch IDs "1" and "2". Then, the accumulated delta time "3.000" is stored corresponding to each of touch IDs "1" and "2".

Next, referring to Figure 23E, a case is shown in which, for example, an operation to turn off the touch of the thumb and the index finger is performed at the time of the next sampling in the game device (guest) 100 (that is, a touch release is performed). A case in which packet loss occurs for the operation data is shown. In this case, SoC 120 of the game device (host) 100 does not recognize that the touch given the touch ID "1" and the touch given the touch ID "2" have disappeared, and therefore, resetting of the accumulated delta time corresponding to the touch IDs "1" and "2" as described with reference to Figure 23B is not performed.

Next, referring to Figure 23F, a case is shown in which, for example, the touch panel is operated again with the thumb and the index finger at the time of the next sampling in the game device (guest) 100. In this example, SoC 120 of the game device (guest) 100 assigns the touch IDs "1" and "2" corresponding to touch coordinates (X1, Y1) and (X2, Y2), respectively, and transmits operation data to which accumulated delta time "0.004" is also assigned to the game device (host) 100. Here, since a touch release has been performed, the touch release count P has changed to P+1.

SoC 120 of the game device (host) 100 resets the accumulated delta time of all touch IDs because the touch release count has increased. SoC 120 of the game device (host) 100 obtains delta time "0.004" by subtracting reset accumulated delta time "0" from the current accumulated delta time "0.004" for the touch IDs "1" and "2".

If resetting of the accumulated delta time based on the touch release count is not performed, SoC 120 of the game device (host) 100 calculates delta time by subtracting the previous accumulated delta time "3.000" from the current accumulated delta time "0.004" for the touch IDs "1" and "2", which causes inconvenience.

Therefore, even in a case where packet loss occurs at the time of a touch release, it is possible to calculate proper delta time by control based on the touch release count and provide it as operation data to the game program which is the application program. For example, the game program which is the application program may calculate an operation speed from the operation data and the delta time based on the delta time, or may estimate operation data at intermediate time (such as a timing at which packet loss occurred).

Regarding the motion sensor data and the mouse data, even in a case where packet loss occurs, it is possible to calculate proper delta time based on a difference between the current accumulated delta time and the previous accumulated delta time and provide it as operation data to the game program which is the application program. Further, regarding the mouse data, even in a case where packet loss occurs, it is possible to calculate a proper differential movement amount based on a difference between the current accumulated movement amount and the previous accumulated movement amount and provide it as operation data to the game program which is the application program. For example, the game program which is the application program may calculate an operation speed from the operation data and the delta time based on the delta time and the differential movement amount, or may estimate operation data at intermediate time (such as timing at which packet loss occurred).

### [F. Modification]

In the above embodiment, a method of assigning a touch ID by assigning the last touch ID +1 has been described. In this case, unless a touch release is performed, that is, as long as even one touch input continues, the touch ID increases according to the number of touch-on operations. On the other hand, as processing for assigning touch IDs, a method of assigning a vacant touch ID (which was previously assigned but has become inactive) may be adopted.

For example, in the processing, the touch ID "1" is assigned to the first touch-on of the thumb, and the touch ID "2" is assigned to the next touch-on of the index finger. Thereafter, similarly, the touch ID number is incremented sequentially for each touch-on, however, for example, the touch ID "2" is canceled for the touch-off of the index finger. Further, for the touch-on of the index finger again, the touch ID "2" may be assigned as a vacant touch ID.

In the case of the method of assigning the vacant touch ID, the touch release count is managed for each touch ID. For example, in step S72 in Figure 12, SoC 120 of the game device (guest) 100 determines whether there is a touch-off for at least one touch ID, and for the touch ID for which there is a touch-off, SoC 120 increments the count and stores it as the touch release count.

Then, SoC 120 of the game device (host) 100 determines the touch release count for each touch ID as a touch release count determination processing in Figure 18.

For example, SoC 120 of the game device (host) 100 compares the acquired touch release count 317 corresponding to the touch ID with the stored touch release count 307 corresponding to the touch ID, and determines whether the touch release count 317 is greater than the touch release count 307.

In step S137, SoC 120 of the game device (host) 100 may, when it determines that the acquired touch release count corresponding to the touch ID is greater than the previous touch release count corresponding to the touch ID, store the acquired touch release count corresponding to the touch ID and reset accumulated delta time of the corresponding touch ID.

Regarding other processes, since they are similar to those described in the above embodiment, detailed description thereof will not be repeated.

Though the embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. An information processing system comprising:
a first information processing device including a mouse; and
a second information processing device, wherein
the first information processing device is configured to perform a first set of operations comprising
periodically acquiring a differential movement amount from its own mouse,
accumulating the acquired differential movement amount to calculate an accumulated movement amount, and
transmitting the accumulated movement amount to the second information processing device, and
the second information processing device is configured to perform a second set of operations comprising
receiving the accumulated movement amount transmitted from the first information processing device,
calculating a differential movement amount from the received accumulated movement amount and the previously received accumulated movement amount, and
executing an application program that uses the differential movement amount of the mouse of the first information processing device.

2. The information processing system according to claim 1, wherein
the second set of operations further comprises periodically acquiring the differential movement amount from its own mouse, and
the application program is configured to use the acquired differential movement amount of the mouse of the second information processing device and the calculated differential movement amount of the mouse of the first information processing device.

3. The information processing system according to claim 1 or 2, wherein
the first set of operations further comprises
acquiring elapsed time from previously acquired time,
accumulating the elapsed time to calculate accumulated elapsed time, and
transmitting the accumulated elapsed time, and
the second set of operations further comprises
receiving the transmitted accumulated elapsed time, and
calculating differential elapsed time from the received accumulated elapsed time and the previously received accumulated elapsed time, and
the application program is configured to use the differential elapsed time and the differential movement amount.

4. The information processing system according to any one of claims 1 to 3, wherein
the application program is a game program, and
the accumulated movement amount is acquired by accumulating the differential movement amount from start of a game.

5. The information processing system according to any one of claims 1 to 4, wherein
the first set of operations further comprises resetting a value of the accumulated movement amount and issuing a notification when a specific condition is satisfied,
the second set of operations further comprises:
resetting the accumulated movement amount based on the notification, the resetting is performed when a game interruption operation is performed in the first information processing device,
the first set of operations further comprises resetting a value of the accumulated elapsed time and issuing a notification when a specific condition is satisfied, and
the second set of operations further comprises resetting the accumulated elapsed time based on the notification.

6. The information processing system according to any one of claims 1 to 5, wherein
the first set of operations further comprises
assigning identification information updated with each acquisition of the differential movement amount, and
transmitting the assigned identification information with the accumulated movement amount to the second information processing device, and
the second set of operations further comprises assigning identification information updated with each reception to the accumulated movement amount transmitted from the first information processing device.

7. An information processing device using a mouse, comprising:
processing circuitry comprising one or more processors; and
one or more memories storing instructions when executed by the one or more processors to perform operations comprising
periodically acquiring a differential movement amount from the mouse,
accumulating the acquired differential movement amount to calculate an accumulated movement amount, and
transmitting the accumulated movement amount to another information processing device.

8. An information processing device connecting to another information processing device using a mouse, comprising:
processing circuitry comprising one or more processors; and
one or more memories storing instructions when executed by the one or more processors to perform operations comprising
acquiring an accumulated movement amount obtained by accumulating a differential movement amount of the mouse from the another information processing device,
calculating a differential movement amount from the acquired accumulated movement amount and a previously acquired accumulated movement amount, and
using the calculated differential movement amount.

9. The information processing device according to claim 7, wherein
the operations further comprise
acquiring elapsed time since previously acquired time,
accumulating the acquired elapsed time to calculate accumulated elapsed time, and
transmitting the accumulated elapsed time to the another information processing device.

10. The information processing device according to claim 8, wherein
the operations further comprise
acquiring accumulated elapsed time obtained by accumulating elapsed time since previously acquired time from the another information processing device, and calculating differential elapsed time since the acquired accumulated elapsed time and previously acquired accumulated elapsed time, and
using the calculated differential elapsed time.

11. A program having stored therein instructions that, when executed, cause one or more processors to perform operations comprising:
periodically acquiring a differential movement amount of a mouse;
accumulating the acquired differential movement amount to calculate an accumulated movement amount; and
transmitting the accumulated movement amount to another information processing device for calculating a differential movement amount.

12. A computer program having stored therein instructions that, when executed, cause one or more processors of an information processing apparatus to perform operations comprising:
acquiring an accumulated movement amount obtained by accumulating a differential movement amount of a mouse from another information processing device;
calculating a differential movement amount from the acquired accumulated movement amount and a previously acquired accumulated movement amount; and
storing the calculated differential movement amount to be used by an application program.

13. The computer program according to claim 11, wherein
the operations further comprise:
periodically acquiring elapsed time since previously acquired time;
accumulating the acquired elapsed time to calculate accumulated elapsed time; and
transmitting the accumulated elapsed time to the another information processing device to calculate elapsed time.

14. The computer program according to claim 12, wherein
the operations further comprise:
acquiring accumulated elapsed time obtained by accumulating elapsed time since previously acquired time from the another information processing device;
calculating differential elapsed time since the acquired accumulated elapsed time and the previously acquired accumulated elapsed time; and
storing the differential elapsed time to be used by the application program.

15. A computer-implemented method comprising:
periodically acquiring a differential movement amount from a mouse;
accumulating the acquired differential movement amount to calculate an accumulated movement amount;
transmitting the accumulated movement amount to another information processing device,
receiving at the another information processing device, the accumulated movement amount;
calculating, at the another information processing device, a differential movement amount from the received accumulated movement amount and a previously received accumulated movement amount; and
executing, at the another information processing device, an application using the differential movement amount.
